# FASCICULE DE BREVET EUROPEEN

(11) **EP 2 478 198 B1**
(45) Date de publication et mention de la délivrance du brevet: **21.06.2017**
(21) Numéro de dépôt: 10776767.5
(22) Date de dépôt: 29.09.2010
(51) Int. Cl.: F02C 3/10, F02C 3/107, F02C 3/14

(54) **TURBOMOTEUR A ARBRES PARALLELES**
TURBOMOTOR MIT PARALLELEN WELLEN
TURBINE ENGINE WITH PARALLEL SHAFTS

(30) Priorité: 17.09.2009 FR 0951218
(43) Date de publication de la demande: 25.07.2012
(73) Titulaire: Safran Helicopter Engines, 64510 Bordes (FR)
(72) Inventeur: DRACHSLER, Antoine, F-64290 Gan (FR); PERBOS, Alain, Michel, F-64320 Idron (FR); SILET, Joël, F-64110 Rontignon (FR)
(74) Mandataire: Gevers & Orès
(86) Numéro de dépôt international: PCT/FR2010/052057
(87) Numéro de publication internationale: WO 2011/033244

(56) Documents cités:
- EP-A2- 0 691 512
- FR-A- 1 467 556
- FR-A- 1 530 430
- GB-A- 2 117 052
- GB-B- 594 207
- JP-A- 10 184 386
- US-A- 2 933 892
- US-A- 3 818 695
- US-A- 4 704 861
- US-A- 4 813 228
- US-A- 5 855 112
- US-A1- 2002 148 227
- US-A1- 2005 056 021

## Description

Le domaine de la présente invention est celui de la propulsion aéronautique, et en particulier celui des turbomoteurs à générateur de gaz et turbine libre.

Les turbomachines sont couramment employées pour la propulsion des aéronefs et notamment pour la propulsion et la sustentation des aéronefs à voilure tournante ou hélicoptères. Le document US2933892 décrit un turbomoteur à turbine libre pour hélicoptère. Ces moteurs comprennent un générateur de gaz constitué d'un compresseur, d'une chambre de combustion annulaire et d'une turbine dite turbine générateur qui entraîne le compresseur par l'intermédiaire d'un arbre, dit arbre générateur. Le générateur de gaz est généralement mono-corps, c'est-à-dire qu'il ne comprend qu'un compresseur et une seule turbine, tous deux reliés par un seul arbre, mais il peut également être multi-corps, c'est-à-dire comprendre plusieurs compresseurs et plusieurs turbines, chaque compresseur étant relié à une turbine par un arbre spécifique. Les gaz en sortie du générateur de gaz sont ensuite envoyés sur une deuxième turbine, dite turbine libre, qui est associée à un arbre de puissance, distinct du ou des arbres du générateur, et qui fournit la puissance utile pour la propulsion. Cet arbre actionne un réducteur relié à la boîte de transmission principale de l'hélicoptère (ou BTP), qui entraîne le moyeu du rotor principal et le rotor anti-couple. Cet ensemble réducteur est généralement intégré avec une boîte d'accessoires pour les équipements nécessaires au bon fonctionnement du moteur ou de l'aéronef.

Pour des raisons de simplicité d'architecture, la turbine libre est généralement positionnée en aval de la dernière turbine du générateur et l'arbre qu'elle entraîne est coaxial avec l'arbre du générateur de gaz. Cet arbre de puissance peut sortir vers l'arrière du moteur ou bien, ce qui est le cas le plus général, être concentrique avec l'arbre du générateur de gaz et revenir vers l'avant. Cette configuration permet, dans un but de compacité et/ou de facilité d'accès, de positionner le réducteur et la boîte d'accessoires au niveau de l'entrée d'air du générateur de gaz.

Ces moteurs à arbres concentriques, comme par exemple celui décrit dans le brevet britannique GB 594207, ont pour inconvénient leur complexité de réalisation et donc une certaine difficulté à les produire à des coûts relativement faibles. A ceci s'ajoute la complexité de la chambre de combustion due à sa forme annulaire, ce qui constitue également un frein à la réduction des coûts de production ; cette forme annulaire nécessite un nombre important de points d'injection ce qui complique, sur les moteurs de petite taille, l'introduction de dispositifs pour la réduction des émissions d'oxydes d'azote NOx.

La présente invention a pour but de remédier à ces inconvénients en proposant un turbomoteur de petite taille qui ne présente pas certaines problématiques des turbomoteurs de l'art antérieur, qui soit de conception simple pour réduire son coût de production, tout en permettant l'incorporation de dispositifs réducteurs des émissions de NOx.

A cet effet, l'invention a pour objet un turbomoteur à turbine libre pour hélicoptère conformément à la revendication 1. Par arbres coaxiaux on entend deux arbres qui sont situés dans le prolongement l'un de l'autre, quel que soit leur sens relatif de rotation.

Cette disposition des arbres donne une grande flexibilité pour l'agencement des deux parties du moteur et permet de choisir une chambre de combustion, dite à pot unique, c'est-à-dire ayant une forme sensiblement cylindrique ou tronconique avec un injecteur unique placé au centre de ce cylindre ou tronc de cône, ce qui permet l'intégration aisée d'un système d'injection permettant la réduction de la formation d'oxydes d'azote. Une chambre de combustion coaxiale avec l'axe de la turbine générateur présente l'avantage de ne pas générer un encombrement excessif, qui ne serait pas compatible d'un des buts recherchés, à savoir réaliser un turbomoteur de petite taille. De plus, les gaz en sortie de la chambre de combustion sont envoyés directement sur la turbine du générateur, ce qui évite la présence d'un fond de chambre qui serait, sinon, nécessaire pour redresser leur flux et qu'il faudrait refroidir. Étant donnée la température très élevée des gaz en sortie de la chambre de combustion sur les moteurs modernes, on échappe, avec la configuration revendiquée, à cette opération qu'il serait particulièrement difficile à mettre en oeuvre. L'arbre de puissance est orienté parallèlement audit arbre moteur. Cette disposition donne une grande compacité au moteur. Le réducteur est associé à une boîte d'accessoires, les deux étant positionnés dans le sens longitudinal sensiblement au niveau de l'entrée d'air du compresseur. La compacité en est encore améliorée et l'ensemble réducteur-boîte d'accessoires est situé dans une zone relativement froide.

De façon préférentielle la chambre de combustion comporte un injecteur incorporant la technologie LPP (ou Lean Premixed Prevaporised, pour Pauvre, Pré-mélangé et Pré-vaporisé). La forme cylindrique ou tronconique de la chambre autorise l'installation d'un injecteur de ce type qui est relativement volumineux mais qui est optimisé pour la réduction des émissions d'oxydes d'azote.

Dans un mode de réalisation la sortie de la chambre de combustion est orientée en direction du compresseur. Cette disposition participe à la compacité du moteur.

Préférentiellement les gaz issus de la combustion sont recueillis dans un collecteur annulaire positionné en aval de la turbine générateur pour être transférés dans une chambre de distribution annulaire positionnée en amont de la turbine libre.

Avantageusement le carter de l'ensemble réducteur-boîte accessoires et le carter du générateur de gaz sont confondus en un carter unique. La conception du dispositif de lubrification de l'ensemble en est facilitée et le carter unique est plus léger et moins cher.

Dans un mode particulier de réalisation le générateur de gaz est un générateur multi-corps comprenant un compresseur haute pression et un compresseur basse pression, une turbine haute pression et une turbine basse pression, lesdites turbines entraînant lesdits compresseurs au moyen respectivement d'un arbre moteur haute pression et d'un arbre moteur basse pression, l'arbre de puissance entraîné par la turbine libre n'étant pas coaxial avec l'arbre moteur haute pression dudit générateur et la chambre de combustion étant coaxiale avec l'arbre moteur haute pression.

Préférentiellement dans le cas d'un turbomoteur multi-corps l'arbre de puissance est coaxial avec l'arbre moteur basse pression. Et de façon encore plus préférentielle l'arbre moteur basse pression est creux et traversé par l'arbre de puissance.

Dans des modes particuliers de réalisation le turbomoteur est muni d'un alternateur de génération électrique haute vitesse, et/ou d'un échangeur de chaleur gaz chauds / air comprimé, entre les gaz en sortie de la turbine libre et l'air en sortie du compresseur.

L'invention concerne également un turbomoteur comportant au moins un dispositif tel que décrit ci-dessus.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples illustratifs non limitatifs, en référence aux dessins schématiques annexés.

Sur ces dessins :
- la figure 1 est une vue en coupe schématique d'un turbomoteur selon un mode de réalisation de l'invention, et
- la figure 2 est un schéma de principe d'un turbomoteur double corps à turbine libre, réalisé selon un mode de réalisation de l'invention.
- la figure 3 est un vue schématique d'une canalisation de transfert des gaz entre deux parties d'un turbomoteur selon l'invention.

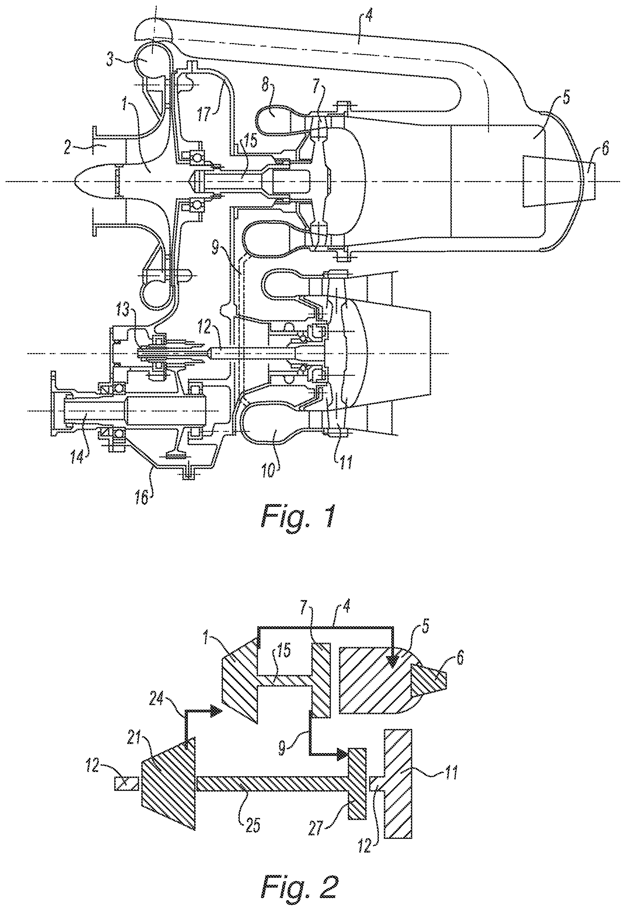

En se référant à la figure 1, on voit en coupe un turbomoteur à turbine libre réalisé en deux parties positionnées côte à côte, une première partie comportant l'ensemble des éléments constituant le générateur de gaz et une seconde partie regroupant les éléments constituant la turbine libre et le réducteur. La première partie comprend un compresseur 1, représenté ici sous la forme d'un compresseur centrifuge, dans lequel pénètre de l'air au travers d'une buse d'aspiration 2 et qui rejette l'air comprimé dans une volute de sortie 3. La volute est disposée en couronne autour du compresseur, avec une section continûment croissante pour recueillir cet air comprimé et l'envoyer, par l'intermédiaire de canalisations amont de transfert 4, dans une chambre de combustion cylindrique 5 où il participe à la combustion d'un carburant injecté par un injecteur 6. Les gaz issus de cette combustion subissent une première détente dans une turbine générateur 7, reliée au compresseur 1 par un arbre générateur 15, puis recueillis dans un collecteur annulaire 8 pour passer dans la seconde partie du moteur. Les pièces tournantes du générateur de gaz qui nécessitent une lubrification, telles que les roulements ou les engrenages, sont contenues dans un carter moteur 17.

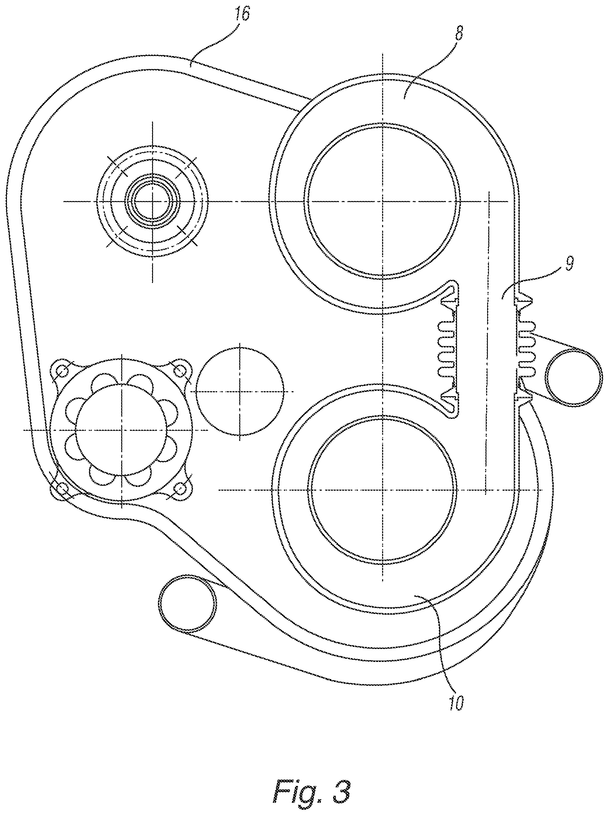

Les gaz sont transférés du collecteur annulaire 8 en sortie de la turbine générateur 7 dans une chambre de distribution 10 située en amont de la turbine libre par une canalisation aval de transfert 9, représentée schématiquement sur la figure 1 et de façon plus détaillée sur la figure 3.

Les gaz sortent de la chambre de distribution 10 en passant à travers la turbine libre 11, où ils subissent une seconde détente en fournissant leur énergie à la turbine libre. La turbine libre est montée sur un arbre de puissance 12 qui récupère l'énergie fournie par les gaz. Cet arbre de puissance 12 est couplé au réducteur 13, pour réduire sa vitesse de rotation et transmettre la puissance à la boite de transmission principale de l'hélicoptère (non représentée), par l'intermédiaire d'un arbre de transmission 14. L'ensemble réducteur-boîte d'accessoires est contenu dans un carter de boîte 16.

Les deux parties constituant le turbomoteur sont disposées, comme indiqué sur la figure 1, parallèlement l'une à l'autre de sorte que les pièces mécaniques qui nécessitent une lubrification soient regroupés dans une même zone. Le carter de boîte 16 et le carter du générateur de gaz 17 constituent un seul et même carter, ce qui facilite la lubrification de l'ensemble de ces pièces et permet de réduire la masse totale de cet élément.

Du fait de l'architecture choisie avec séparation en deux parties du turbomoteur, la chambre de combustion 5 n'est pas traversée par l'arbre moteur 15, comme c'est le cas dans les moteurs de l'art antérieur. La disparition de la contrainte associée à la présence de cet arbre, offre de nouvelles possibilités de conception pour la forme que peut prendre la chambre, et en particulier elle peut prendre une forme cylindrique comme représentée sur la figure 1. Elle présente également une orientation inverse de celle des moteurs de l'art antérieur, avec la sortie des gaz qui est orientée en direction du compresseur 1. L'arbre moteur peut ainsi être considérablement raccourci et est donc plus simple à fabriquer et finalement plus léger.

En se référant maintenant à la figure 2, on va maintenant décrire un deuxième mode de réalisation, dans lequel l'invention est appliquée sur un turbomoteur double corps. Les deux arbres générateurs 15 et 25 des corps basse et haute pression du générateur de gaz ne sont ici pas coaxiaux. L'arbre du corps basse pression 25 est, par contre, creux et est traversé par l'arbre de puissance 12 de la turbine libre.

Le fonctionnement de ce turbomoteur dans ce deuxième mode de réalisation est analogue au précédent fonctionnement dans le premier mode de réalisation, avec de l'air qui est aspiré dans une buse d'entrée puis comprimé dans le compresseur basse pression (ou BP) 21. Cet air est ensuite transféré par une première canalisation amont de transfert 24 dans le compresseur haute pression (ou HP) 1. Après une deuxième compression, réalisée par le compresseur HP, il est transféré par une seconde canalisation amont de transfert 4 dans une chambre de combustion cylindrique 5 et participe à la combustion du carburant introduit dans cette chambre par un injecteur 6. Les gaz, après combustion, sont détendus dans une turbine haute pression 7, reliée mécaniquement au compresseur HP 1 par un arbre moteur HP 15, et passent, via une canalisation aval de transfert 9, dans une chambre de distribution positionnée en amont de la turbine BP. De cette chambre de distribution ils traversent une turbine BP 27 qui entraîne le compresseur BP 21 par l'intermédiaire de l'arbre BP 25. En sortie de la turbine BP ils sont envoyés sur une turbine libre 11 qui entraîne l'arbre de puissance 12 comme précédemment.

Dans la configuration présentée sur la figure 2 l'arbre de puissance 12 traverse l'arbre moteur BP 25 creux pour entrer dans le réducteur 13. A contrario l'arbre moteur HP tourne séparément, en étant indépendant mécaniquement des deux autres arbres. Le fait de faire tourner l'arbre de puissance 12 à l'intérieur de l'arbre moteur BP 25 ne présente pas, ici, les inconvénients rencontrés dans les turbomoteurs mono-corps de l'art antérieur avec arbres coaxiaux, dans la mesure où la vitesse de rotation de l'arbre BP est relativement faible et comparable en valeur à celle de l'arbre de puissance 12.

Le turbomoteur objet de l'invention, comporte ainsi, entre autres, les caractéristiques suivantes :
- un générateur de gaz sur une ligne d'arbre et une turbine libre sur une seconde ligne d'arbre non coaxiale avec la première,
- une chambre de combustion dite à pot unique, c'est-à-dire de forme sensiblement cylindrique ou tronconique, située du côté aval du générateur de gaz, en référence au sens de l'écoulement des gaz, avec un injecteur unique,
- un carter unique pour les pièces tournantes lubrifiées du générateur de gaz et pour la boite de transmission principale.

La configuration décrite ci-dessus procure un certain nombre d'avantages.

Elle facilite une conception "bas coût" du turbomoteur, en choisissant tout d'abord un carter commun pour les parties à lubrifier du générateur de gaz, du réducteur et de la boîte d'accessoires, puis une chambre de combustion à pot unique et enfin une absence d'arbres concentriques (ou dans le cas d'un double-corps de seulement deux arbres concentriques au lieu de trois).

L'intégration du moteur dans l'hélicoptère est facilitée par le choix d'un générateur de gaz positionné parallèlement à l'ensemble associé à la turbine libre et par une intégration plus poussée pour l'ensemble formé par la turbine libre et le réducteur. On obtient ainsi une compacité pour le turbomoteur meilleure que pour ceux de l'art antérieur. Par ailleurs cette intégration s'effectue en conservant, comme c'était le cas dans l'art antérieur avec des arbres coaxiaux, un positionnement du réducteur dans une zone froide de l'hélicoptère, en le situant du côté de l'admission de l'air dans le générateur de gaz et non pas du côté de l'évacuation des gaz brûlés.

La conception en deux parties facilement séparables, une pour le générateur de gaz et une pour la turbine libre et l'entraînement des accessoires, donne au turbomoteur une architecture modulaire qui facilite la maintenance et réduit les coûts d'entretien.

L'arbre moteur 15 du générateur de gaz (ou l'arbre moteur HP dans le cas d'un moteur multi-corps) n'étant pas traversé par un autre arbre, peut présenter un diamètre réduit et dès lors être optimisé en termes de tenue mécanique et de masse.

Enfin le moteur conserve une entrée d'air et un échappement orientés de façon axiale par rapport au moteur, ce qui évite des volutes de redressement du flux gazeux et les pertes de rendement qui seraient engendrées.

Cette configuration de moteur est par ailleurs compatible avec divers accessoires qui améliorent le fonctionnement des turbomoteurs, tels qu'un alternateur, ou alterno-démarreur, à grande vitesse qui permet de réduire la consommation spécifique de 2 à 3%, un injecteur 6 incorporant la technologie LLP (Lean Premixed Prevaporised, ou Pauvre, Pré-mélangé et Pré-vaporisé) à émission de NOx réduites, qui est relativement volumineux mais dont l'utilisation est rendue possible par la taille et la forme cylindrique ou tronconique de la chambre de combustion 5, ou encore un échangeur de chaleur disposé en sortie des gaz brûlés qui réduit la consommation spécifique d'environ 10% par le réchauffement de l'air en sortie du compresseur 1 (ou du compresseur BP 21 dans le cas d'un turbomoteur multi-corps). La disposition générale du turbomoteur à arbres parallèles, compte tenu de la suppression de l'arbre de puissance au sein du générateur de gaz et du déport des accessoires de l'axe de ce générateur, facilite grandement l'installation de tels dispositifs.

Bien que l'invention ait été décrite en relation avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Turbomoteur à turbine libre pour hélicoptère comprenant d'une part un générateur de gaz comportant au moins un compresseur (1) alimenté en air, une chambre de combustion (5) recevant l'air comprimé en sortie dudit compresseur (1), et au moins une turbine générateur (7) reliée mécaniquement audit compresseur (1) par un arbre moteur (15) et entraînée par les gaz issus de la combustion d'un carburant effectuée dans ladite chambre de combustion (5), et comprenant d'autre part une turbine libre (11) alimentée par les gaz issus de ladite combustion après leur passage à travers ladite turbine générateur (7) et qui entraîne un arbre de puissance (12) orienté de façon non coaxiale avec l'arbre moteur (15) du générateur de gaz et fournissant la puissance du turbomoteur au travers d'un réducteur (13),
**caractérisé en ce que** la turbine générateur (7) est du type axiale et **en ce que** la chambre de combustion (5) est une chambre de forme sensiblement cylindrique ou tronconique, coaxiale avec l'axe de la turbine générateur et comportant un injecteur unique (6),
dans lequel l'arbre de puissance (12) est orienté parallèlement audit arbre moteur (15)et dans lequel le réducteur est associé à une boîte d'accessoires, les deux étant positionnées dans le sens longitudinal sensiblement au niveau de l'entrée d'air du compresseur (1).

2. Turbomoteur selon la revendication 1 dans lequel le carter de l'ensemble réducteur-boite d'accessoires (16) et le carter du générateur de gaz (17) sont confondus en un carter unique.

3. Turbomoteur selon la revendication 1 dans lequel la chambre de combustion (5) comporte un injecteur (6) incorporant la technologie LPP (Lean Premixed Prevaporised).

4. Turbomoteur selon l'une des revendications 1 à 3 dans lequel la sortie de la chambre de combustion (5) est orientée en direction du compresseur (1).

5. Turbomoteur selon l'une des revendications 1 à 4 dans lequel les gaz issus de la combustion sont recueillis dans un collecteur annulaire (8) positionné en aval de la turbine générateur (7) pour être transférés dans une chambre de distribution annulaire (10) positionnée en amont de la turbine libre (11).

6. Turbomoteur selon l'une des revendications 1 à 5 dans lequel le générateur de gaz est un générateur multi-corps comprenant un compresseur haute pression (1) et un compresseur basse pression (21), une turbine haute pression (7) et une turbine basse pression (27), lesdites turbines entraînant lesdits compresseurs au moyen respectivement d'un arbre moteur haute pression (15) et d'un arbre moteur basse pression (25), l'arbre de puissance (12) entraîné par la turbine libre (11) étant orienté de façon non coaxiale avec l'arbre moteur haute pression (15) dudit générateur, la turbine haute pression (7) étant du type axiale et la chambre de combustion étant coaxiale avec l'arbre moteur haute pression (15).

7. Turbomoteur selon la revendication 6 dans lequel l'arbre moteur basse pression (25) est creux et traversé par l'arbre de puissance (12).

8. Turbomoteur selon la revendication 7 dans lequel l'arbre de puissance (12) et l'arbre moteur basse pression (25) sont concentriques.

9. Turbomoteur selon l'une des revendications 1 à 8 sur lequel est monté un alternateur à grande vitesse.

10. Turbomoteur selon l'une des revendications 1 à 9 muni d'un échangeur de chaleur gaz chauds-air comprimé, entre les gaz en sortie de la turbine libre (11) et l'air en sortie du compresseur (1).

11. Hélicoptère propulsé à l'aide d'un turbomoteur selon l'une des revendications précédentes.

## Patentansprüche

1. Turbomotor mit einer freien Turbine für einen Helikopter, der einerseits einen Gasgenerator, der zumindest einen Kompressor (1) umfasst, der mit Luft versorgt wird, eine Brennkammer (5), die die komprimierte Luft von dem Auslass des Kompressors (1) empfängt, und mindestens einen Turbinengenerator (7) umfasst, der mit dem Kompressor (1) mechanisch durch eine Antriebswelle (15) verbunden ist und von den Gasen angetrieben wird, die von der Verbrennung eines Brennstoff stammen, die in der Verbrennungskammer (5) durchgeführt wird, und andererseits eine freie Turbine (11), die mit den Gasen versorgt wird, die von der Verbrennung nach ihrem Durchgang den Turbinengenerator (7) stammen und die eine Antriebswelle (12) antreiben, die nicht koaxial zu der Motorwelle (15) des Gasgenerators ausgerichtet ist, und die Leistung des Turbinenmotors über ein Untersetzungsgetriebe (13) zuführen,
**dadurch gekennzeichnet, dass** der Turbinengenerator (7) vom axialen Typ ist, und dass die Verbrennungskammer (5) eine Kammer mit einer im Wesentlichen zylindrischen oder kegelförmigen Form ist, die Koaxial zu der Achse des Turbinengenerators ist und eine einzelne Düse (6) umfasst, wobei die Antriebswelle (12) parallel zu der Motorwelle (15) ausgerichtet ist. und wobei das Untersetzungsgetriebe mit einem Zubehörkasten verbunden ist, wobei beide in der Längsrichtung im Wesentlichen bei dem Lufteinlass des Kompressors (1) positioniert sind.

2. Turbomotor nach Anspruch 1, wobei das Gehäuse der Anordnung Untersetzungsgetriebe - Zubehörkasten (16) und das Gehäuse des Gasgenerators (17) in einem einzigen Gehäuse kombiniert sind.

3. Turbomotor nach Anspruch 1, wobei die Verbrennungskammer (5) einen Injektor (6) umfasst, in dem die Technologie LPP (Lean Premixed Prevaporised) inkorporiert ist.

4. Turbomotor nach einem der Ansprüche 1 bis 3, wobei der Auslass der Verbrennungskammer (5) in Richtung des Kompressors (1) ausgerichtet ist.

5. Turbomotor nach einem der Ansprüche 1 bis 4, wobei die Gase, die von der Verbrennung stammen, in einer ringförmigen Sammelleitung (8) gesammelt werden, die stromabwärts von dem Turbinengenerator (7) positioniert ist, um in eine ringförmige Verteilungskammer (10) übertragen zu werden, die stromaufwärts von der freien Turbine (11) positioniert ist.

6. Turbomotor nach einem der Ansprüche 1 bis 5, wobei der Gasgenerator ein Generator mit mehreren Körpern ist, der einen Hochdruckkompressor (1) und einen Niederdruckkompressor (21), eine Hochdruckturbine (7) und eine Niederdruckturbine (27) umfasst, wobei die Turbinen die Kompressoren mittels einer Hochdruck-Antriebswelle (15) bzw. einer Niederdruck-Antriebswelle (25) antreiben, wobei die Antriebswelle (12), die von der freien Turbine (11) angetrieben wird, nicht mit der Hochdruckantriebswelle (15) des Generators koaxial ausgerichtet ist, und wobei die Hochdruckturbine (7) vom axialen Typ ist, und wobei die Verbrennungskammer koaxial zu der Hochdruckantriebswelle (15) ist.

7. Turbomotor nach Anspruch 6, wobei die Niederdruckantriebswelle (25) hohl ist und von der Antriebswelle (12) durchquert wird.

8. Turbomotor nach Anspruch 7, wobei die Antriebswelle (12) und die Niederdruckantriebswelle (25) konzentrisch sind.

9. Turbomotor nach einem der Ansprüche 1 bis 8, an dem ein Hochgeschwindigkeitswechselstromgenerator angebracht ist.

10. Turbomotor nach einem der Ansprüche 1 bis 9, der mit einem Wärmetauscher heißes Gas - komprimierte Luft zwischen dem Gas am Auslass der freien Turbine (11) und der Luft am Auslass des Kompressors (1) versehen ist.

11. Helikopter, der mit Hilfe von einem Turbomotor nach einem der vorhergehenden Ansprüche angetrieben wird.

## Claims

1. A turboshaft engine with free turbine comprising on the one hand a gas generator comprising at least one compressor (1) supplied with air, a combustion chamber (5) receiving the compressed air leaving said compressor (1), and at least one generator turbine (7) connected mechanically to said compressor (1) by a drive shaft (15) and driven by the gases arising from fuel combustion carried out in said combustion chamber (5), and further comprising a free turbine (11) supplied with the gases arising from said combustion after passage thereof through said generator turbine (7) and which drives a power shaft (12) oriented non-coaxially with the drive shaft (15) of the gas generator and supplying turboshaft engine power via a reduction gearbox (13),
**characterized in that** the generator turbine (7) is of the axial type and **in that** the combustion chamber (5) is a substantially cylindrical or frustoconical chamber, coaxial with the axis of the generator turbine and comprising a single injector (6),
in which the power shaft (12) is oriented parallel to said drive shaft (15), and
in which the reduction gearbox is associated with an accessories gearbox, the two being positioned in the longitudinal direction substantially on a level with the air inlet of the compressor (1).

2. The turboshaft engine as claimed in claim 1, in which the casing of the reduction gearbox/accessories gearbox (16) and the casing of the gas generator (17) are combined into a single casing.

3. The turboshaft engine as claimed in claim 1, in which the combustion chamber (5) comprises an injector (6) incorporating LPP (Lean Premixed Prevaporized) technology.

4. The turboshaft engine as claimed in one of claims 1 to 3, in which the outlet of the combustion chamber (5) is oriented towards the compressor (1).

5. The turboshaft engine as claimed in one of claims 1 to 4, in which the gases arising from combustion are collected in an annular collector (8) positioned downstream of the generator turbine (7) for transfer into an annular distribution chamber (10) positioned upstream of the free turbine (11).

6. The turboshaft engine as claimed in one of claims 1 to 4, in which the gas generator is a multi-spool generator comprising a high pressure compressor (1) and a low pressure compressor (21) together with a high pressure turbine (7) and a low pressure turbine (27), said turbines driving said compressors by means respectively of a high pressure drive shaft (15) and a low pressure drive shaft (25), the power shaft (12) driven by the free turbine (11) not being coaxial with the high pressure drive shaft (15) of said generator and the combustion chamber being coaxial with the high pressure drive shaft (15).

7. The turboshaft engine as claimed in claim 6, in which the low pressure drive shaft (25) is hollow and has the power shaft (12) passing through it.

8. The turboshaft engine as claimed in claim 7, in which the power shaft (12) and the low pressure drive shaft (25) are concentric.

9. The turboshaft engine as claimed in one of claims 1 to 8, on which a high speed alternator is mounted.

10. The turboshaft engine as claimed in one of claims 1 to 9, provided with a hot gas/compressed air heat exchanger, between the gases leaving the free turbine (11) and the air leaving the compressor (1).

11. An aircraft propelled by means of a turboshaft engine as claimed in one of the preceding claims.
